Europäisches Patentamt

European Patent Office

Office européen des brevets

(11) Publication number: **0 051 339**
**B1**

## (12) EUROPEAN PATENT SPECIFICATION

(45) Date of publication of patent specification: **12.06.85**

(21) Application number: **81201207.8**

(22) Date of filing: **29.10.81**

(51) Int. Cl.⁴: **G 11 B 23/02, G 11 B 17/02**

(54) Optical disc cartridge.

(30) Priority: **03.11.80 US 203099**

(43) Date of publication of application:
**12.05.82 Bulletin 82/19**

(45) Publication of the grant of the patent:
**12.06.85 Bulletin 85/24**

(84) Designated Contracting States:
**DE FR GB IT**

(56) References cited:
**DE-A-2 621 798**
**DE-A-2 822 899**

**IBM Technical Disclosure Bulletin Vol. 22, No.
3, August 1979, New York R.C. Treseder "Drive
for hermetically sealed disk file" p.1181-1182**

**Patents Abstracts of Japan vol. 4 no. 31, 18
March 1980 p.103P2**

(73) Proprietor: **North American Philips Corporation
100 East 42nd Street 9th Floor
New York, N.Y. 10017 (US)**

(72) Inventor: **Kenney, George Churchill
INT. OCTROOIBUREAU B.V. Prof. Holstlaan 6
NL-5656 AA Eindhoven (NL)**

(74) Representative: **Van Weele, Paul Johannes Frits
et al
INTERNATIONAAL OCTROOIBUREAU B.V. Prof.
Holstlaan 6
NL-5656 AA Eindhoven (NL)**

Courier Press, Leamington Spa, England.

## Description

The subject invention relates to discs for information storage, and in particular, the type having a radiation-sensitive medium which provides an immediate change in the optical properties during the writing thereon, commonly referred to as a direct read after write (DRAW) materials.

The recording process for this type of record medium includes the manufacture of the blank record, the recording of information on the record and the subsequent encasing of the record to prevent damage to the radiation-sensitive material due to mishandling. It has been found, however, that between the manufacturing of the blank record and the encasing of the recorded record, damage, in the form of scratches and nicks due to mishandling nonetheless occur.

Discs having an optically recordable layer on one side, which is exposed to laser light from that side during recording, i.e. not through the disc thickness, are known for mastering purposes. Where the recording layer is metallic such recording can be read without further processing. However, such mastering is carried out in a controlled manufacturing environment. Discs using such layers have to date only been made available for the commercial user in a sandwich construction providing a protective layer for the recording layer.

U.S. Patent 4,074,282 to Balas Jr. et al discloses a radiation-sensitive record wherein a radiation-sensitive material is applied to one surface of a relatively thick disc. A second disc, being transparent and relatively thin, is then coaxially spaced over the radiation-sensitive material. Sealing rings, or spacers, are then used to form a sealed enclosure containing the radiation-sensitive material. During the recording of such a record in a recording apparatus, as for exampled as disclosed in U.S. Patent 3,908,076 to Broadbent, this entire assembly is rotated and the radiation beam e.g. laser beam, is focused through the transparent disc onto the surface of the radiation-sensitive material.

While this arrangement does protect the radiation-sensitive material from damage due to mishandling, different problems have arisen through the use thereof. Since recording and reading is performed through the second disc, it is necessary that the entire disc be transparent and of uniform thickness. The density of recording depends inversely upon the square of the diameter of the focused spot at the recording surface. Thus, at the uniformity of thickness of the medium, through which the radiation beam is focused, degrades, the size of the focused spot varies to such an extent as to prevent reliable high density recording. Therefore, one must then increase the nominal size of the focused spot to compensate for these variations, which increase limits the desired high density recording. For greater detail reference may be had to the paper entitled "System Coding Parameters, Mechanics and Electro-Mechanics of the Reflective Video Disc Player" presented by P. W. Bogels at the IEEE Conference on Consumer Electronics, June 8, 1976.

Hence, a practical limitation in Balas, Jr. to the amount of information that may be recorded on the record, is the cost incurred in manufacturing a flat transparent disc. In addition, since the second disc of the Balas, Jr. arrangement must extend across the entire radiation-sensitive layer, it must be of some minimum thickness so that it is rigid. This then requires a relatively heavy recording objective to compensate for the disc thickness.

An object of the present invention is to provide a radiation-sensitive record which is protected from damage due to mishandling.

Another object of the present invention is to provide a radiation-sensitive record having a high recording density.

A further object of the present invention is to provide a radiation-sensitive record which may be recorded thereon using a relatively light recording objective.

These objects are achieved in an optical information-storage device comprising a rotatable record disc provided with a recording layer on at least one of its planar sides comprising a radiation-sensitive material which may be locally melted, gasified, or otherwise physically or chemically modified by a radiation beam, air tight containing means being provided to contain said radiation-sensitive material within a hermetically sealed space, the containing means comprising radiation-transparent means through which a radiation beam can enter said space from outside the containing means to travel through said space and to impinge on the recording layer, characterized in that,

— the containing means consist of a stationary enclosure,

— the record disc is rotatable within the enclosure with clearance,

— the radiation transparent means consist of a narrow strip in a wall of the enclosure, which strip has a highly uniform thickness, and

— means are provided for rotationally driving the disc in air-tight manner through a wall of the enclosure with a driving motor outside it.

With the above and additional objects and advantages in mind as will hereinafter appear, the invention will be described with reference to the accompanying drawings in which:

Figure 1 is a side view of the cartridge of this invention, partly in section, showing the disc-shaped member within the enclosure; and

Figure 2 is a top plan view of a portion of the cartridge of the invention showing the record/read access window.

Referring to the figures, a radiation-sensitive record cartridge is indicated by the reference 1. The cartridge 1 comprises a disc-shaped member 3 having a layer 5 of radiation-sensitive material formed on opposing planar sides thereof. Examples of such radiation-sensitive material are thin layers of metals such as tellurium and tellurium compounds, rhodium or beryllium, metal compounds such as arsenic silenide, bismuth compounds, amorphous semiconductors, organic dyes, multilayer structures and photochromic materials.

The disc-shaped member 3 is completely surrounded by an enclosure 7 which may be formed by two complementary sections 9 joined along the edges 11 thereof to form a hermetically sealed compartment 13 containing the disc-shaped member 3. The compartment 13 is of such a size that the disc-shaped member 3 may freely move therein. As such, the disc-shaped member 3 is rotatably supported in the enclosure 7 by bearing means which may include a pivot pin 15 attached to said enclosure 7 and spanning said compartment 13, and a bearing assembly 17 to engaging said pivot pin 15. The pivot 15 is positioned within the enclosure 7 such that when the bearing assembly 17 is fitted within a central bore 19 formed in the disc-shaped member 3, the disc-shaped member 3 may freely rotate about the pivot pin 15.

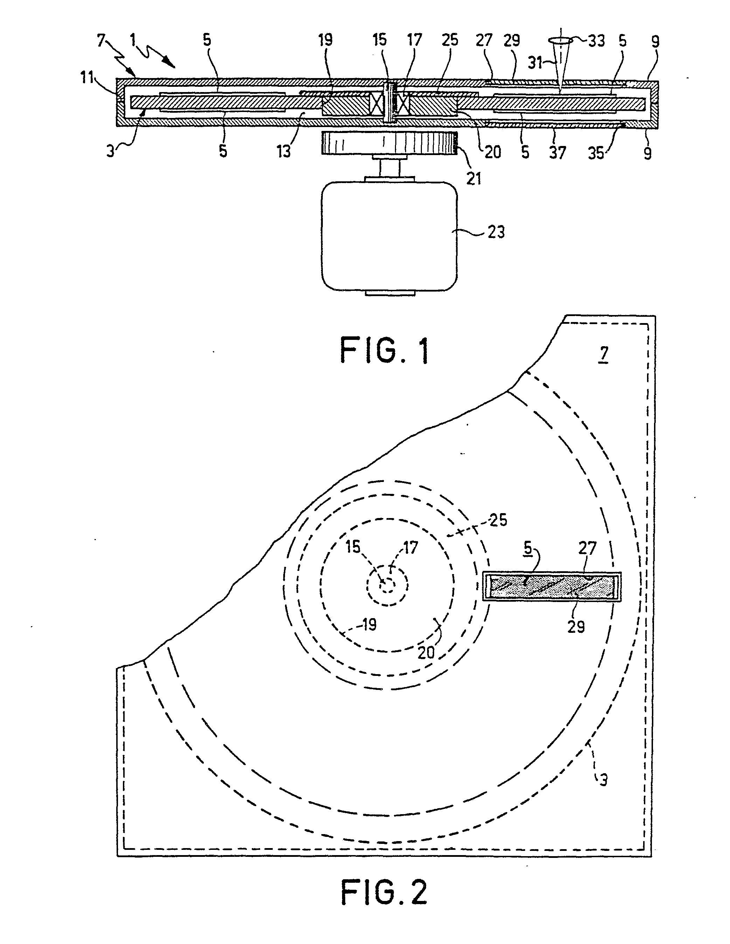

As stated above, the enclosure 7 is hermetically sealed. Therefore, means must be provided to effect the rotation of the disc-shaped member 3. One method illustrated in Figure 1 is the use of a magnetic drive. This type of drive utilizes the attractive forces of two permanent magnetics to transmit torque through a non-magnetic material, which in this case would be enclosure 7. As shown in Figure 1, an annular disc 20 of magnetic material is fitted between the central bore 19 of the disc-shaped member 3 and the bearing assembly 17. This disc 20, along with an external complementary disc 21 attached to a drive motor 23, is magnetized with multiple poles on the face thereof. If desired, a backplate 25 may be affixed to the disc 20 opposite from the drive motor 23 to shunt the magnetic field emanating from the disc 20.

In order to access the radiation-sensitive layer 5 on the disc-shaped member 3, an elongate aperture 27 is formed in the enclosure in a radial direction from the axis of the pivot pin 15 and directly overlying the radiation-sensitive layer 5. A transparent window 29, for example 100 micrometer microscope slide glass, is then inserted and sealed in the aperture 27 through which radiation, for example a laser beam 31, may be focused from an objective lens 33. If, as illustrated in Figure 1, the radiation-sensitive layer 5 has been applied to both sides of the member 3, a second aperture 35, with a window 37 secured therein, is similarly formed on the opposite side of the enclosure 7 for access to the opposite side of the disc-shaped member 3.

An alternate embodiment of the invention would eliminate the bearings and the magnetics in that the disc-shaped member 3 driven directly by the motor 23. Such arrangement would require a rotating seal between the disc-shaped member 3 and the enclosure 7 to prevent contamination.

Numerous alternations of the structure herein disclosed will suggest themselves to those skilled in the art. However, it is to be understood that the present disclosure relates to a preferred embodiment of the invention which is for the purposes of illustration only and not to be constructed as a limitation of the invention.

**Claims**

1. An optical information-storage device comprising a rotatable record disc provided with a recording layer on at least one of its planar sides comprising a radiation-sensitive material which may be locally melted, gasified, or otherwise physically or chemically modified by a radiation beam, air tight containing means being provided to contain said radiation-sensitive material within a hermetically sealed space, the containing means comprising radiation-transparent means through which a radiation beam can enter said space from outside the containing means to travel through said space and to impinge on the recording layer, characterized in that,
— the containing means consist of a stationary enclosure,
— the record disc is rotatable within the enclosure with clearance,
— the radiation transparent means consist of a narrow strip in a wall of the enclosure, which strip has a highly uniform thickness,
— means are provided for rotationally driving the disc in air-tight manner through a wall of the enclosure with a driving motor outside it.

2. Optical information-storage device according to Claim 1, characterized in that the said means for driving the disc comprise rotating seal means.

**Patentansprüche**

1. Optische Informationsspeichervorrichtung mit einer drehbaren Aufzeichnungsplatte mit einer Aufzeichnungsschicht an mindestens einer der flachen Seiten mit einem strahlungsempfindlichen Material, das örtlich geschmolzen, verflüchtigt oder auf andere Art und Weise physikalisch oder chemisch durch ein Strahlungsbündel geändert werden kann, wobei luftdichte Haltemittel vorgesehen sind zum Einhalten des genannten strahlungsempfindlichen Materials in einem hermetisch geschlossenen Raum, wobei die Haltemittel strahlungsdurchlässige Mittel aufweisen, durch die hindurch ein Strahlungsbüdel von Ausserhalb der Haltemittel in den Raum eindringen kann um durch den genannten Raum hindurchzugehen und auf die Aufzeichnungsschicht aufzuprallen, dadurch gekennzeichnet, dass
— die Haltemittel aus einer ortsfesten Hülle bestehen,
— die Aufzeichnungsplatte mit Speilraum innerhalb der Hülle drehbar ist,
— die strahlungsdurchlässigne Mittel aus einem engen Streifen in einer Wand der Hülle bestehen, welcher Streifen eine äusserst einheitliche Dicke hat und
— Mittel vorgesehen sind zum drehbaren Antreiben der Platte auf eine luftdichte Art und Weise durch eine Wand der Hülle, wobei sich ein Antriebsmotor draussen befindet.

2. Optische Informationsspeichervorrichtung nach Anspruch 1, dadurch gekennzeichnet, dass die genannten Mittel zum Antreiben der Platte drehende Dichtungsmittel aufweisen.

**Revendications**

1. Dispositif optique de stockage d'information comportant un disque d'enregistrement rotatif dont au moins l'une des faces planes est recouverte d'une couche d'enregistrement comportant un matériau sensible aux rayonnements qui peut localement être fondu, gazifié ou être soumis d'une autre manière à une modification physique ou chimique par un faisceau de rayonnement, un contenant étanche à l'air étant prévu pour contenir ce matétiau sensible aux rayonnements dans un espace fermé hermétiquement, contenant qui comporte des moyens transparents aux rayonnements à travers lesquels un faisceau de rayonnement peut entrer dans ledit espace à partir de l'extérieur du contenant de façon à se propager à travers ledit espace et à tomber sur la couche d'enregistrement, caractérisé en ce que

— le contenant est constituè par une enceinte stationnaire,

— le disque d'enregistrement peut tourner avec jeu dans l'enceinte,

— les moyens transparents aux rayonnements sont constitués d'une bande étroite présente dans une paroi de l'enceinte et ayant une épaisseur très uniforme et

— il est prévu des moyens servant à imprimer d'une manière étanche à l'air, à travers une paroi de l'enceinte, un mouvement rotatif au disque au moyens d'un moteur d'entraînement extérieur.

2. Dispositif optique de stockage d'information selon la revendication 1, caractérisé en ce que lesdits moyens d'entraînement du disque comportent des moyens d'étanchéité rotatifs.

FIG. 1

FIG. 2